## Europäisches Patentamt

## European Patent Office

## Office européen des brevets

(19)

(11) Veröffentlichungsnummer: **0 314 814**
A1

(12) **EUROPÄISCHE PATENTANMELDUNG**

Veröffentlicht nach Art. 158 Abs. 3 EPÜ

(21) Anmeldenummer: **88905038.1**

(22) Anmeldetag: **10.05.88**

Daten der zugrundeliegenden internationalen Anmeldung:

(86) Internationale Anmeldenummer:
**PCT/SU88/00107**

(87) Internationale Veröffentlichungsnummer:
**WO88/08955 (17.11.88 88/25)**

(51) Int. Cl.³: **G 01 B 5/03**

(30) Priorität: **12.05.87 SU 4242410**

(43) Veröffentlichungstag der Anmeldung:
**10.05.89 Patentblatt 89/19**

(84) Benannte Vertragsstaaten:
**DE IT SE**

(71) Anmelder: **VILNJUSSKY FILIAL EXPERIMENTALNOGO NAUCHNO-ISSLEDOVATELSKOGO INSTITUTA METALLOREZHUSCHIKH STANKOV(ENIMS)**
**ul. Zhirmunu, 139**
**Vilnjus, 232600(SU)**

(72) Erfinder: **GAPSHIS, Vladas-Algis Adolfovich**
**ul. Zhemaites, 7-9**
**Vilnjus, 232000(SU)**

(72) Erfinder: **DZIDOLIKAS, Kyastutis Pyatrovich**
**ul. Zhyamogju, 7-4**
**Kaunas, 233000(SU)**

(72) Erfinder: **KUMETAITIS, Juozas-Stasis Pranovich**
**ul. Karolinishkju, 24-120**
**Vilnjus, 232044(SU)**

(72) Erfinder: **KASPARAITIS, Albinas Juozovich**
**ul. Arkhitektu, 67-34**
**Vilnjus, 232049(SU)**

(74) Vertreter: **Lehn, Werner, Dipl.-Ing. et al,**
**Hoffmann, Eitle & Partner Patentanwälte Arabellastrasse 4**
**D-8000 München 81(DE)**

(54) **KOORDINATEN-MESSGERÄT.**

(57) Die Koordinatenmeßmaschine enthält ein Gestell (1), ein Portal (3), ein mit den Stützen (4, 5) des Portals (3) verbundenes transversales Versteifungselement (13), ein mit dem Glied (13) zusammenwirkendes Fahrwerk (14) des Portals (3), ein ein Meßlineal (8) und einen mit dem Glied (13) verbundenen Meßkopf (10) aufweisendes Meßsystem für das Fahren des Portals (3) und eine Stütze (7) zur Anordnung des Meßsystems für das Fahren des Portals (3), die auf dem Gestell (1) in einem gleichen Abstand von den Stützen (4, 5) des Portals (3) angeordnet ist. Auf der Stütze (7) ist das Lineal (8) in der Weise angeordnet, daß eine Fortsetzung der Längsachse des Lineals (8) darstellende Gerade den durch das Portal (3) umfaßten Meßbereich überquert.

./...

FIG.1

# KOORDINATENMEßMASCHINE

## Gebiet der Technik

Die Erfindung bezieht sich auf die Mittel für Längen- und Winkelmessungen und betrifft insbesondere Koordinatenmessmaschinen.

## Bisheriger Stand der Technik

Es sind Koordinatenmeßmaschinen bekannt, die ein Gestell, ein mit der Möglichkeit einer Verschiebung in Bezug auf das Gestell angeordnetes Portal und eine auf dem Portal mit der Möglichkeit einer Verschiebung längs des Portals angeordnete Laufkatze enthält. In der Laufkatze ist eine Pinole mit der Möglichkeit deren Verschiebung in der Vertikalebene untergebracht, und an der Pinole ist ein System vom Meßfühlern zum Befühlen eines zu messenden Erzeugnisses im Vorgang der Messung seiner geometrischen Abmessungen angebracht. Das Portal bewegt sich mittels eines Fahrwerks. Die Maschine weist auch ein Meßsystem für das Portalfahren auf, das außerhalb des Portals auf einer der Seitenflächen des Gestells angeordnet ist. In der Nähe des Meßsystems, auch außerhalb des Portals, liegt das Portalfahrwerk (Ferranti-Prospekt "The name that ensures Success", Methology Systems, SC, 0657/027/3M).

Es ist ferner eine Koordinatenmeßmaschine bekannt, die ein Gestell mit Führungen enthält, auf denen ein Portel verfahren wird, das einen Meßbereich umfaßt, in dem ein Erzeugnis zum Messen seiner geometrischen Parameter untergebracht wird. Auf dem Portal ist eine Laufkatze mit der Möglichkeit einer Verschiebung längs des Portals angeordnet, während in der Laufkatze eine Pinole mit einem System von Meßfühlern untergebracht ist, die sich in der Vertikalebene bewegt. Das Portalfahrwerk, beispielsweise in Form einer Bewegungsschraube und einer Mutter, wirkt mit einem transversalen Versteifungsglied zusammen, das die unteren Abschnitte der Portalstützen schließt. Die Maschine weist ein Meßsystem für das Portalfahren auf, das ein auf dem Gestell befestigtes Maßstablineal und einen Meßkopf, beispielsweise in Form eines Satzes von Fotogebern, enthält, der auf dem transversalen Versteifungsglied (SU,A,621955) angeordnet ist.

- 2 -

Das transversale Versteifungsglied bildet mit dem Portal einen geschlossenen Kreis.

Die beiden bekannten Koordinatenmeßmaschinen sichern keine erforderliche Meßgenauigkeit und -leistung, weil das Meßsystem für das Portalfahren in einem großen Abstand vom Meßbereich und von dessen vereinbartem geometrischem Mittelpunkt liegt, während das Portalfahrwerk vom Schwerpunkt des eigentlichen Portals entfernt ist. Infolgedessen entstehen zusätzliche Meßfehler wegen einer Unbeständigkeit von Winkelschwingungen des Portals, die bei dessen Fahren in Erscheinung treten, sowie eine Winkelabweichung des Portals. Das Portal wird daher mit einer geringen Geschwindigkeit gefahren, die außerdem konstant zu halten ist, besonders im Moment des Anfahrens der Meßfläche durch das System von Meßfühlern und im Moment der Ablesung von Koordinatenwerten in den Meßpunkten. Dies verursacht eine Senkung der Meßleistung.

Offenbarung der Erfindung

Der Erfindung liegt die Aufgabe zugrunde eine Koordinatenmeßmaschine zu schaffen, in der durch Änderung der Lage des Meßsystems für das Portalfahren der Meßfehler wegen der Winkelschwingungen und der Winkelabweichung des Portals bei seinem Fahren verringert ist.

Diese Aufgabe wird dadurch gelöst, daß die Koordinatenmeßmaschine, die ein Gestell, ein sich über auf dem Gestell angeordnete Führungen bewegendes und den Meßbereich umfassendes Portal, ein mit den Portalstützen verbundenes transversales Versteifungsglied, ein mit dem transversalen Versteifungsglied zusammenwirkendes Portalfahrwerk und ein Meßsystem für das Portalfahren enthält, das ein mit dem Gestell verbundenes Maßstablineal und einen mit dem transversalen Versteifungsglied verbundenen Meßkopf aufweist, gemäß der Erfindung sie eine Stütze zur Anordnung des Meßsystems für das Portalfahren aufweist, die auf dem Gestell in einem gleichen Abstand von den Portalstützen angeordnet und an der das Maßstablineal des Meßsystems für das Portalfahren in der Weise angebracht ist, daß eine eine Fortsetzung der Längsachse des Meßstablineals darstellende Gerade

- 3 -

den Meßbereich überquert.

Es ist zweckmäßig, daß das transversale Versteifungsglied an Konsolen befestigt ist, die an den Portalstützen über der Stütze zur Anordnung des Meßsystems für das Portalfahren montiert sind.

Das Portalfahrwerk ist zweckmäßigerweise auf der Stütze zur Anordnung des Meßsystems für das Portalfahren in der Nähe ihres Maßstablineals zu installieren.

Die Gerade, längs der die Bewegungskraft für das Portalfahren mit Hilfe des Portalfahrwerks erzeugt wird, kann in einer Vertikalebene liegen, die durch den Schwerpunkt des eigentlichen Portals parallel zur Fahrrichtung des Portals in Bezug auf das Gestell durchgeht.

Es erwies sich als vorteilhaft, daß die Koordinatenmeßmaschine Stäbe aufweist, die durch ein anderes transversales Versteifungsglied verbunden sind, auf dem der Meßkopf angeordnet ist, und deren jeder auf der jeweiligen Stütze parallel zum Gestell befestigt ist und durch die jeweilige Stütze und Konsole durchgeht.

Es ist erwünscht, die Stäbe aus einem Material herzustellen, dessen Wärmeausdehnungskoeffizient unter der Bedingung gewählt ist, bei der eine Verschiebung des Meßkopfes in Bezug auf einen Querträger ausgeschlossen wird.

Die Stäbe können mit einer Hülle aus einem Wärmeisolierstoff versehen werden.

Das Portalfahrwerk ist zweckmäßigerweise mit dem ersten transversalen Versteifungsglied zu verbinden.

Die behandelte Ausführung der Koordinatenmeßmaschine gestattet es, die Meßgenauigkeit und -leistung zu erhöhen.

Kurze Beschreibung der Zeichnungen

Die Erfindung soll durch die nachstehende Beschreibung eines Ausführungsbeispiels anhand der beiliegenden Zeichnungen näher erläutert werden. Es zeigt

Fig. 1 die Gesamtansicht einer erfindungsgemäßen Koordinatenmeßmaschine;

Fig. 2 die gleiche Maschine im Schnitt durch eine Portalstütze.

Bevorzugte Ausführungsform der Erfindung

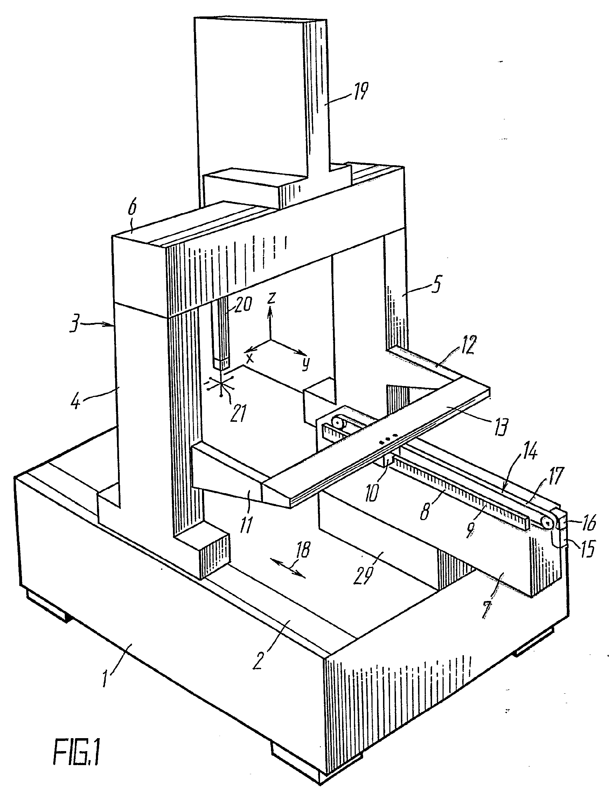

Die Koordinatenmeßmaschine enthält ein Gestell 1 (Fig. 1), auf dem Führungen 2 zur Bewegung eines Portals 3 auf dem Gestell 1 angeordnet sind, das Stützen 4 und 5 und einen Querbalken 6 aufweist und den Meßbereich umfaßt, in dem ein Erzeugnis (in der Zeichnung nicht angedeutet) untergebracht wird.

Auf dem Gestell 1 liegt in einem gleichen Abstand von den Stützen 4 und 5 des Portals 3 eine Stütze 7 zur Anordnung eines Meßsystems für das Fahren des Portals 3. Das Meßsystem enthält ein Meßstablineal 8 mit einem auf dieses aufgetragenen Raster 9 und einen in einer beliebigen bekannten Weise ausgeführten beispielsweise einen optoelektronischen oder Induktions-Meßkopf. Das Maßstablineal 8 ist im oberen Teil der Stütze 7 befestigt, so daß die eine Fortsetzung der Längsachse des Lineals 8 darstellende Gerade den Meßbereich überquert.

An den Stützen 4 und 5 des Portals 3 sind Konsolen 11 und 12 angeordnet, an denen ein transversales Versteifungsglied 13 befestigt ist, wobei das Glied 13 oberhalb der Stütze 7 liegt und daran der Meßkopf 10 derart montiert ist, daß er in Wechselwirkung mit dem Lineal 8 steht.

Auf der Stütze 7 ist in der Nähe des Lineals 8 ein Fahrwerk 14 des Portals 3 angeordnet, das einen Motor 15, ein Untersetzungsgetriebe 16 und einen Riementrieb 17 enthält, der mit dem Glied 13 zusammenwirkt. Das Werk 14 erzeugt eine Bewegungskraft für das Portal 3, die an das Portal 3 durch den Riementrieb 17, das Glied 13 und die Konsolen 11, 12 vermittelt wird, wobei die Gerade, längs der die Kraft erzeugt wird, in einer Vertikalebene liegt, die durch den Schwerpunkt des Portals 3 durchgeht (der bei der symmetrischen Ausführung des Portals 3 um die Vertikalachse unterhalb des Trägers 6 auf dem halben Weg zwischen seinen Stützen 4,5 liegt) und parallel zu der Fahrrichtung des Portals 3 in Bezug auf das Gestell 1 verläuft, die durch einen Pfeil 18 angedeutet ist.

Auf dem Träger 6 des Portals 3 ist eine längs des Trägers 6 verschiebbare Laufkatze 19 montiert, in der eine

- 5 -

sich an der Laufkatze auf- und abwärts bewegende und ein System von Meßfühlern 21 zum Befühlen eines zu messenden Erzeugnisses im Vorgang der Messung seiner geometrischen Abmessungen tragende Pinole 20 angeordnet ist.

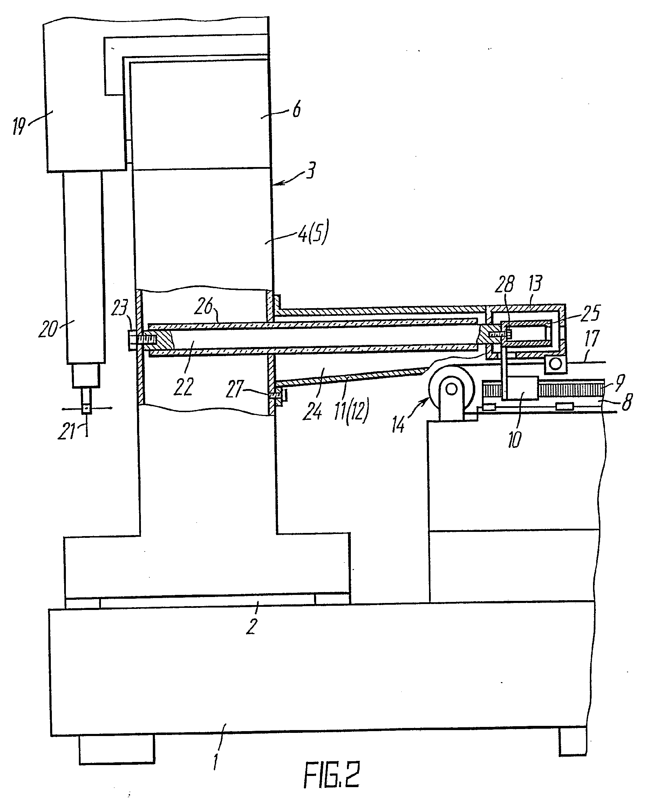

Fig. 2 zeigt eine andere Ausführungsform der Maschine, bei der in jeder Stütze 4 und 5 eine Bohrung ausgeführt ist, in deren jeder ein Stab 22 untergebracht ist, der an der jeweiligen Stütze 4 (5) durch Befestigungsteile 23 befestigt ist. Der Stab 22 überragt die Stütze 4 (5) und geht durch einen Hohlraum 24 der jeweiligen Konsole 11 (12) durch. An den freien Enden der Stäbe 22 ist ein zweites transversales Versteifungsglied 25 befestigt, das die Stäbe 22 verbindet. Am Versteifungsglied 25 ist der Meßkopf 10 des Meßsystems für das Fahren des Portals 3 angeordnet.

Die Stäbe 22 sind aus einem Material hergestellt, dessen Wärmeausdehnungskoeffizient unter der Bedingung gewählt ist, bei der eine Verschiebung des Meßkopfes 10 in Bezug auf den Querträger 6 des Portals 3 ausgeschlossen wird. Sind die Stützen 4,5 des Portals 3 aus Stahl hergestellt, sind die Stäbe 22 wünschenswert aus Quarzglas oder Keramik herzustellen, wobei der Wärmeausdehnungskoeffizient des Materials der Stäbe 22 kleiner als der Wärmeausdehnungskoeffizient des Materials der Stützen 4,5 des Portals 3 ist und sich die Stäbe 22 bei einer Änderung der Umgebungstemperatur der Stützen 4, 5 nicht verlängern, weshalb der Meßkopf 10 stehen bleibt, was die Beeinflussung der Meßgenauigkeit durch diese Temperaturänderung des Portals 3 eliminiert.

Zum gleichen Zweck können die Stäbe 22 eine Hülle aus einem Wärmeisolierstoff, beispielsweise aus einem Kunststoff, aufweisen.

Außerdem ist der Riementrieb 17 des Fahrwerks 14 des Portals 3 mit dem ersten Versteifungsglied 13 gekoppelt, was ebenfalls die Meßgenauigkeit durch Verhinderung einer Verformung des mit dem Meßkopf 10 verbundenen Gliedes 25 erhöht.

Die Konsole 11 (12) ist an der jeweiligen Stütze 4 (5)

mittels Schrauben 27 befestigt, während das Glied 25 am Stab 22 mit Hilfe einer Schraube 28 befestigt wird.

Die in Fig. 1 dargestellte Koordinatenmeßmaschine arbeitet wie folgt.

Durch das Werk 13 wird das Portal 3 mittels des Gliedes 13 und der Konsolen 11,12 in Richtung des Meßbereichs (in Richtung der Achse Y des Koordinatensystems) auf den Führungen 2 bezüglich des Gestells 1 gefahren. Die Verschiebung des Portals 3 wird durch den Kopf 10 gemessen, der sich auf dem Lineal 8 bewegt. Die Laufkatze 19 bewegt sich bezüglich des Portals 3 in Richtung der Achse X des Koordinatensystems, während sich in Bezug auf die Laufkatze 19 in Richtung der Achse Z des Koordinatensystems die Pinole 20 mit dem System von Meßfühlern 21 verschiebt, die die vorgegebenen Punkte auf der Oberfläche des Kontrollerzeugnisses berühren. Auf Grund der gemeinsamen Verschiebung des Portals 3, der Laufkatze 19 und der Pinole 20 werden Koordinaten der Sollpunkte der Oberfläche des Erzeugnisses ermittelt, nach denen in einem beliebigen bekannten Verfahren die geometrischen Parameter des Erzeugnisses festgestellt werden.

Die Stütze 7 liegt außerhalb des Meßbereichs, jedoch derart, daß das mit der Stütze 7 gekoppelte Meßsystem für das Fahren des Portals 3 einen Mindestabstand zum Meßbereich aufweist, was in der vorliegenden Maschine eine minimal mögliche Nichteinhaltung des Abbe-Prinzips (nach dem der Abstand zwischen dem Meßsystem und dem Kontrollerzeugnis minimal sein muß, um die Meßgenauigkeit zu erhöhen) sicherstellt, weshalb der Meßfehler auf Grund einer winkelmäßigen Schiefstellung des sich bewegenden Portals 3 abnimmt.

Die Höhe der Stütze 7 (Fig. 1) wird durch ein Ausgleichsglied 29 geregelt, das unter der Stütze 7 auf dem Gestell 1 angeordnet wird, was es gestattet, das Lineal 8 bezüglich des Meßbereichs bei einer unterschiedlichen Höhe des Erzeugnisses zu orientieren.

Durch Anordnung des Werks 14 auf der Stütze 7 wird das Trägheitsmoment des Portals 3 verringert sowie dessen Verschiebung ohne Winkelschwingungen und mit einer größeren Beschleunigung, besonders beim Anfahren der Meßflä-
che und im Augenblick der Ablesung der Koordinaten der auf
der Oberfläche des Erzeugnisses vorgegebenen Punkte, ermöglicht. Dies steigert die Leistung des gesamten Meßvorganges.

Die behandelte Koordinatenmeßmaschine weist eine derartige Konstruktion auf, die es gestattet, die Meßgenauigkeit und die Leistung des Meßvorganges zu erhöhen.

Gewerbliche Anwendbarkeit

Die Erfindung kann zur Messung von Längen- und Winkelmaßen, Abweichungen in der Form und einer gegenseitigen Anordnung von Teilen komplizierter Konfiguration, beispielsweise bei Gehäusen, Stützen, Wellen, Flanschen, Zahnrädern und anderen ähnlichen Erzeugnissen, im Energiemaschinenbau, der Autoindustrie, im Werkzeugmaschinenbau und
in anderen Bereichen der Technik verwendet werden.

- 8 -

PATENTANSPRÜCHE

1. Koordinatenmeßmaschine, die ein Gestell (1), ein sich über auf dem Gestell (1) angeordnete Führungen (2) bewegendes und den Meßbereich umfassendes Portal (3), ein mit den Stützen (4,5) des Portals (3) verbundenes transversales Versteifungsglied (13), ein mit dem transversalen Versteifungsglied (13) zusammenwirkendes Fahrwerk (14) des Portals (3) und ein Meßsystem für das Fahren des Portals (3) enthält, das ein mit dem Gestell (1) verbundenes Maßstablineal (8) und einen mit dem transversalen Versteifungsglied (13) verbundenen Meßkopf (10) aufweist, dadurch g e k e n n z e i c h n e t, daß sie eine Stütze (7) zur Anordnung des Meßsystems für das Fahren des Portals (3) aufweist, die auf dem Gestell (1) in einem gleichen Abstand von den Stützen (4,5) des Portals (3) angeordnet und an der das Maßstablineal (8) des Meßsystems für das Fahren des Portals (3) in der Weise angebracht ist, daß eine eine Fortsetzung der Längsachse des Maßstablineals (8) darstellende Gerade den Meßbereich überquert.

2. Koordinatenmeßmaschine nach Anspruch 1, dadurch g e k e n n z e i c h n e t, daß das transversale Versteifungsglied (13) an Konsolen (11, 12) befestigt ist, die an den Stützen (4,5) des Portals (3) über der Stütze (7) zur Anordnung des Meßsystems für das Fahren des Portals (3) befestigt sind.

3. Koordinatenmeßmaschine nach Anspruch 1 oder 2, dadurch g e k e n n z e i c h n e t, daß das Fahrwerk (14) des Portals (3) auf der Stütze (7) zur Anordnung des Meßsystems für das Fahren des Portals (3) in der Nähe ihres Maßstablineals (8) installiert ist.

4. Koordinatenmeßmaschine nach Anspruch 3, dadurch g e k e n n z e i c h n e t, daß die Gerade, längs der die Bewegungskraft für das Fahren des Portals (3) mit Hilfe des Portalfahrwerks (14) erzeugt wird, in einer Vertikalebene liegt, die durch den Schwerpunkt des eigentlichen Portals (3) parallel zur Fahrrichtung des Portals (3) in Bezug auf das Gestell (1) verläuft.

5. Koordinatenmeßmaschine nach Anspruch 2, dadurch gekennzeichnet, daß sie Stäbe (22) aufweist, die durch ein anderes transversales Versteifungsglied (25) verbunden sind, auf dem der Meßkopf (10) angeordnet ist, und deren jeder auf der jeweiligen Stütze (4,5) parallel zum Gestell (1) befestigt ist und durch die jeweilige Stütze (4,5) und Konsole (11, 12) durchgeht.

6. Koordinatenmeßmaschine nach Anspruch 3, dadurch gekennzeichnet, dass sie Stäbe (22) aufweist, die durch ein anderes transversales Versteifungsglied (25) verbunden sind, auf dem der Meßkopf (10) angeordnet ist, und deren jeder auf der jeweiligen Stütze (4,5) parallel zum Gestell (1) befestigt ist und durch die jeweilige Stütze (4,5) und Konsole (11, 12) durchgeht.

7. Koordinatenmeßmaschine nach Anspruch 5, dadurch gekennzeichnet, daß die Stäbe (22) aus einem Material hergestellt sind, dessen Wärmeausdehnungskoeffizient unter der Bedingung gewählt ist, bei der eine Verschiebung des Meßkopfes (10) in Bezug auf einen Querträger (6) des Portals (3) versperrt wird.

8. Koordinatenmeßmaschine nach Anspruch 6, dadurch gekennzeichnet, daß die Stäbe (22) aus einem Material hergestellt sind, dessen Wärmeausdehnungskoeffizient unter der Bedingung gewählt ist, bei der eine Verschiebung des Meßkopfes (10) in Bezug auf einen Querträger (6) des Portals (3) versperrt wird.

9. Koordinatenmeßmaschine nach Anspruch 5, dadurch gekennzeichnet, daß die Stäbe (22) eine Hülle (26) aus einem Wärmeisolierstoff aufweisen.

10. Koordinatenmeßmaschine nach Anspruch 6, dadurch gekennzeichnet, daß die Stäbe (22) eine Hülle (26) aus einem Wärmeisolierstoff aufweisen.

11. Koordinatenmeßmaschine nach Anspruch 3, dadurch gekennzeichnet, daß das Fahrwerk (14) des Portals (3) mit dem ersten transversalen Versteifungsglied (13) verbunden ist.

12. Koordinatenmeßmaschine nach Anspruch 5, dadurch gekennzeichnet, daß das Fahrwerk (14) des Portals (3) mit dem ersten transversalen Versteifungsglied (13) verbunden ist.

- 10 -

13. Koordinatenmeßmaschine nach Anspruch 7, dadurch g e k e n n z e i c h n e t, daß das Fahrwerk (14) des Portals (3) mit dem ersten transversalen Versteifungsglied (13) verbunden ist.

14. Koordinatenmeßmaschine nach Anspruch 9, dadurch g e k e n n z e i c h n e t, daß das Fahrwerk (14) des Portals (3) mit dem ersten transversalen Versteifungsglied (13) verbunden ist.

FIG.1

FIG.2

## I. CLASSIFICATION OF SUBJECT MATTER (if several classification symbols apply, indicate all) [6]

According to International Patent Classification (IPC) or to both National Classification and IPC

IPC[4]  G 01 B 5/03

## II. FIELDS SEARCHED

### Minimum Documentation Searched [7]

| Classification System | Classification Symbols |
|---|---|
| IPC[4] | G 01 B 5/00, 5/03, 5/20 |

### Documentation Searched other than Minimum Documentation to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | GB, A, 2099151, (LK Tool Company Limited et al.) 1 December 1982 (01.12.82), see page 1, lines 96-123, page 2, lines 15-25, fig. 2 | 4,11-14 |
| A | US, A, 4594791, (The Warner & Swasey Company) 17 June 1986 (17.06.86), see columns 2-4, fig. 2-4 | 1,2 |
| A | SU, A1, 621955, (Vilnjussky filial Ordena Trudovogo Krasnogo Znameni experimentalnogo nauchno-issledovatelskogo instituta metallorezhuschikh stankov), 1 August 1978 (01.08.78), see column 2, lines 24-30, columns 3,4, fig. 1 | 1,4,5,11-14 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 July 1988 (20.07.88) | 8 August 1988 (08.08.88) |
| International Searching Authority | Signature of Authorized Officer |
| ISA/SU | |